# EUROPEAN PATENT SPECIFICATION

(11) **EP 3 376 405 B1**
(45) Date of publication and mention of the grant of the patent: **23.11.2022**
(21) Application number: 16902606.9
(22) Date of filing: 09.09.2016
(51) Int. Cl.: G06F 16/958, G06F 16/955

(54) **CONTENT METADATA IDENTIFICATION AND APPLICATION METHOD SUPPORTING SHARING AND GOVERNANCE**
IDENTIFIZIERUNG VON INHALTSMETADATEN UND ANWENDUNGSVERFAHREN MIT UNTERSTÜTZUNG VON TEILEN UND KONTROLLE
IDENTIFICATION DE MÉTADONNÉES DE CONTENU ET PROCÉDÉ D'APPLICATION PRENANT EN CHARGE LE PARTAGE ET LA GOUVERNANCE

(30) Priority: 30.08.2016 CN 201610785180
(43) Date of publication of application: 19.09.2018
(73) Proprietor: Southeast University, Nanjing, Jiangsu 210096 (CN)
(72) Inventor: YANG, Peng, Nanjing Jiangsu 210096 (CN); LI, Youping, Nanjing Jiangsu 210096 (CN); YIN, Hao, Nanjing Jiangsu 210096 (CN); LV, Yongqiang, Nanjing Jiangsu 210096 (CN); ZHANG, Changjiang, Nanjing Jiangsu 210096 (CN); ZHENG, Bin, Nanjing Jiangsu 210096 (CN)
(74) Representative: Laufhütte, Dieter
(86) International application number: PCT/CN2016/098511
(87) International publication number: WO 2018/040120

(56) References cited:
- EP-A2- 1 085 443
- CN-A- 101 187 938
- CN-A- 102 650 989
- CN-A- 102 937 998
- US-A1- 2004 181 534
- ROCA INRIA B ADAMSON NAVAL RESEARCH LABORATORY V: "FCAST: Object Delivery for the Asynchronous Layered Coding (ALC) and NACK-Oriented Reliable Multicast (NORM) Protocols; rfc6968.txt", FCAST: OBJECT DELIVERY FOR THE ASYNCHRONOUS LAYERED CODING (ALC) AND NACK-ORIENTED RELIABLE MULTICAST (NORM) PROTOCOLS; RFC6968.TXT, INTERNET ENGINEERING TASK FORCE, IETF; STANDARD, INTERNET SOCIETY (ISOC) 4, RUE DES FALAISES CH- 1205 GENEVA, SWITZER, 9 July 2013 (2013-07-09), pages 1-40, XP015095002, [retrieved on 2013-07-09]
- "ENGINEERING COMMITTEE Digital Video Subcommittee SCTE 67 2014", ITU-T DRAFT ; STUDY PERIOD 2013-2016, INTERNATIONAL TELECOMMUNICATION UNION, GENEVA ; CH, vol. 6/9, 13 May 2014 (2014-05-13), pages 1-80, XP044095147, [retrieved on 2014-05-13]

## Description

### BACKGROUND OF THE INVENTION

### Field of the Invention

The present invention pertains to the field of Internet and information technologies, and specifically relates to a computer implemented identification method of content metadata for cyber content sharing and governance, which can improve the efficiency of big content data sharing and promote the governance of cyber content in a big data and pan-media environment.

### Description of Related Art

With rapid development of Internet technologies and applications and fast growth in number of network users, content distribution and sharing characterized by pan-media and massiveness are becoming the mainstream of Internet application development, and the big data trends of network content are becoming increasingly obvious. Due to the convenience and ubiquity of content distribution, big content data in Cyberspace increasingly shows such characteristics as complex, heterogeneous, uneven, disorder and the like, and is extremely difficult to handle. Countries worldwide are actively searching for effective technologies to cope with severe challenges brought by pan-media and big data trends of cyber content. The 2^{nd} World Internet Conference held in Wuzhen proposed the development concept of "An Interconnected World Shared and Governed by All", and emphasized promotion of changes of the global Internet through sharing and governance. The core goal of the sharing and governance of the Interconnected World is the sharing and governance of big content data on the Internet. The continuous updating big content data in the Internet is abundant, unstructured (or semi-structured) and highly heterogeneous; therefore, the key to the sharing and governance of big content data is to innovate the content metadata identification method.

Conventionally, uniform resource locators (URLs) are mainly employed in the Internet to identify resources in the network, but they usually can only represent the locations of content resources, and can hardly describe the rich semantics of contents, thereby leading to problems such as difficulty in searching and governing content resources, and confusion and disorder in Cyberspace. Some other content identification methods, such as digital object identifier (DOI), and content identification methods proposed by the Information-Centric Networking, including hierarchical content identification methods (e.g., TRIAD, CCN and NDN), flat content identification methods (e.g., DONA, PSIRP and NetInf) and attribute-based content identification methods (e.g., CBCB), in general, have weak description capabilities for semantics and management information of contents, and can hardly satisfy sharing and governance requirements on cyber big content data. In addition, the Doublin Core Metadata Element Set (Dublin Core) has great international influence in recent years. It has developed into a content metadata standard related to uniform resource identifiers (URIs). However, 15 core metadata elements in the Dublin Core are originated from the digital "library card catalog", and can hardly meet the requirements of sharing and governance on big content data. Therefore, it is urgent to invent an innovative identification method of content metadata that supports big content data sharing and governance cyber in a big data and pan-media environment, and accordingly propose a corresponding application method for high-efficiency sharing and governance of big content data.

ROCA INRIA B ADAMSON NAVAL RESEARCH LABORATORY V: "FCAST: Object Delivery for the Asynchronous Layered Coding (ALC) and NACK-Oriented Reliable Multicast (NORM) Protocols; rfc6968.txt", FCAST: OBJECT DELIVERY FOR THE ASYNCHRONOUS LAYERED CODING (ALC) AND NACK-ORIENTED RELIABLE MULTICAST (NORM) PROTOCOLS; RFC6968.TXT, INTERNET ENGINEERING TASK FORCE, IETF; STANDARD, INTERNET SOCIETY (ISOC) 4, RUE DES FALAISES CH- 1205 CENEVA, SWITZER, 9 July 2013, pages 1 - 40 relates to object delivery for the asynchronous layered coding (ALC) and NACK-Oriented Reliable Multicast (NORM) Protocols.

"ENGINEERING COMMITTEE Digital Video Subcommittee SCTE 67 2014", ITU-T DRAFT; STUDY PERIOD 2013-2016, INTERNATIONAL TELECOMMUNICATION UNION, GENEVA; CH, vol.6/9, 13 May 2014, pages 1 - 80 discloses recommended practice for SCTE 35 Digital Program Insertion Cueing Message for Cable.

EP 1 085 443 A2 relates to a system for tracking usage of digital content on user devices.

### SUMMARY OF THE INVENTION

Objective of the invention: To solve the problems and defects in the prior art, the present invention provides a computer implemented identification method of content metadata for cyber content sharing and governance as set out in the claims 1 - 7.. The identification method is suitable for generating uniform identifiers of various types of content resources, and not only can describe rich semantics of contents in details, but also has a built-in ability to provide content authentication and security guarantee capabilities. The identification method can be applied to develop various content sharing and governance applications, and supports efficient aggregation and distribution, personalized active service, semantics-based deep analysis, authentication and registration, law-based source tracing and responsibility investigation and the like of big content data, thereby significantly improving the performance and level of content sharing and governance.

Technical solution: A computer implemented identification method of content metadata for cyber content sharing and governance is provided. Different from existing methods, the identification method is mainly proposed to meet cyber big content data sharing and governance requirements in a big data and pan-media environment, and can effectively compensate for the defects of various existing content metadata identification methods, such as rich semantic description, efficient distribution and sharing, authentication and security guarantee, and governance of big content data in Cyberspace and the like. The identification method adopts a uniform content metadata description framework and a uniform specification method to closely associate providers, users and governors of the sharing contents to form a content-centric innovative metadata identification system, which is called an MDCCSG (Metadata for Cyber Content Sharing and Governance) identification method in the present invention. The application method of MDCCSG identifiers can be used to develop various content sharing and governance applications, and to effectively support sharing and governance of big content data in Cyberspace.

The computer implemented identification method of content metadata for cyber content sharing and governance provided by the present invention mainly includes three parts: a uniform description framework of content metadata, a uniform specification method for content metadata, and definition of core MDCCSG identifier elements, specifically comprising:
1) The uniform description framework of content metadata. The MDCCSG identification method fully considers big content data sharing and governance requirements in a big data and pan-media environment, and adopts a uniform description framework to identify the content metadata. The description framework generates a content metadata identifier with a uniform format (referred to as an MDCCSG identifier) for each content resource to be identified, which includes two parts: MDCCSG identifier short code and MDCCSG property information.

The MDCCSG identifier short code with a standard length of 32 bytes is located at the front part of the whole MDCCSG identifier, and it consists of a plurality of fields. These fields store several content-related key information description codes (called as basic short code). In addition, the MDCCSG identifier short code may also have an extension part containing extension information description code (called as extension short code) with a length of an integer multiple of 16 bytes (that is, 16B×n, n=0, 1, 2, 3, ...) used for storing extension fields in addition to the basic short code. The basic short code and the extension short code are together referred to as the MDCCSG identifier short code.

The MDCCSG property information is immediately after the MDCCSG identifier short code, and contains a plurality of metadata set units (MDSUs). Each MDSU contains a plurality of metadata elements (MDEs), and each MDE describes content-related property information. The MDCCSG property information contains two compulsory key MDSUs: a description information set unit (DISU) and a management information set unit (MISU). The DISU focuses on description of basic properties and semantic information of the contents; and the MISU focuses on description of important property information related to content management and governance in Cyberspace.

2) The uniform specification method for content metadata. Based on a uniform description framework of content metadata, the MDCCSG identification method especially focuses on the high efficiency and flexibility of the encoding for the content metadata identifier and precision and uniformity of the specification format. The MDCCSG identification method includes:
(1) A high-efficient and flexible content metadata encoding. To improve the efficiency of distribution and processing of content metadata identifiers in a network environment, the MDCCSG identification method does not use XML-based encoding usually adopted by conventional identification technologies, but adopts different encoding formats for the MDCCSG identifier short code and the MDCCSG property information respectively. In the MDCCSG identifier short code, 32 bytes are fully utilized to define the bit-based content metadata information and a plurality of key fields described by binary integers are used for describing the semantics and security information about the content especially those information facilitating to provide quick guide, filtering, interest matching and personal recommendation for the content users. In the MDCCSG property information, a plurality of MDEs are classified and collected by metadata set unit (MDSU); and each MDSU and MDE adopts uniform encoding format with necessary parsing information to ensure the encoding is simple , compact, easy to parse, and memory saving. Meanwhile, the flexibility and extensibility of MDCCSG identifiers are ensured by means of reservation and on-demand extension.
(2) A precise and uniform content metadata specification format. The MDCCSG identification method can identify all types of content resources, and the obtained MDCCSG identifiers all follow a uniform format standard, such that the MDCCSG identifiers can be effectively collected and aggregated to form an MDCCSG identifier space of cyber big content data. In addition, in each MDCCSG identifier, the specification formats of metadata information with common features are categorized and refined to ensure that a minimum number of categories are used, and these categories are defined precisely and normatively to make each category follow a uniform format and description style. The main specification format of the MDCCSG identifiers are classified into the following four types: fields in the MDCCSG identifier short code, specified by binary integers in bits; an MDSU head with a length of 5 to 8 bytes mainly specifying type number of the MDSU, number of MDEs, total length of all MDEs, MDE Quick Matcher and the like; an MDE head with a length of 3 to 6 bytes mainly specifying type number of the MDE, number of members, MDE body length and the like; an MDE body occupying a plurality of bytes and describing specific values of the MDE itself. The head of the MDCCSG property information also adopts a specification format similar to the MDSU head.
(3) Definition of core MDCCSG identifier elements. The MDCCSG identification method concerns subject demands of the providers, users and governors of the sharing contents simultaneously, and selects a plurality of core content metadata identifier elements (referred to as MDCCSG identifier elements, or referred to as identifier elements for short). The MDCCSG identifier elements cover information of contents such as semantic description, trust authentication and security guarantee, and support functions of "double signature mechanism" and "multi-level authentication and registration as well as source tracing and responsibility investigation"; therefore, this method is obviously different from other existing identification methods. The method specifically includes:
   (1) Core identifier elements in the MDCCSG identifier short code. The first key identifier element of this part is Version, occupying 3 bits, and used for describing the version number of an MDCCSG identifier. The current version number is 001 (wherein 000 is reserved), representing Version v1. In Version v1, the core identifier elements in the MDCCSG identifier short code further include: Type of Media (occupying 5 bits), Precedence (occupying 4 bits), Flag (occupying 4 bits), Parse Rule (occupying 12 bits), Source (occupying 28 bits), Category (occupying 8 bits), Subcategory (occupying 8 bits), Topic (occupying 32 bits), Content Type (occupying 8 bits), Copyright & Originality (occupying 8 bits), Security EL Code (occupying 8 bits), Timestamp in Seconds (occupying 40 bits), Timestamp in Milliseconds (occupying 10 bits), Serial No. (occupying 22 bits), Checksum (occupying 16 bits) and the like. In addition, 6 bytes are reserved in the part following Serial No. and before Checksum.
   (2) Core identifier elements in the MDCCSG property information. This part adopts MDSUs to categorize and collect MDCCSG identifier elements, and there are mainly three types of MDSUs, namely, a DISU, an MISU, and an extension information set unit (EISU), where the DISU and the MISU are compulsory identification items. The core identifier elements collected by the DISU include: Title, Keyword, Abstract, Author, Entity, Copyright, File Description and the like. The core identifier elements collected by the MISU include: Physical Elements, Provenance, Content ID, Propagation Path, Signature of Content, Security EL Info, Chain of Responsibility, Signature of Whole MDCCSG and the like. Each core identifier element is an MDE having an MDE head of the same format, and the sequence, type number and the like of the core identifier elements are specified.
   (3) Core identifier elements supporting trust authentication and security guarantee. Compared with the conventional identification methods, the greatest feature of the MDCCSG identification method, is that it provides built-in support for content-based trust authentication and security guarantee; meanwhile, the MDCCSG identification method innovatively introduces the security energy level (EL) concept in light of the energy level of the electron, and embodies the security EL concept in MDCCSG identifier. Core identifier elements related to the above characteristic mainly include: Security EL Code (simplified description of Security EL Info) in the MDCCSG identifier short code; and Physical Elements, Signature of Content, Security EL Info, Chain of Responsibility, Signature of Whole MDCCSG and the like in the MDCCSG property information. Wherein the Physical Elements focus on describing such physical dimension information as "time, space, people, thing, object" and the like. The Signature of Content and Signature of Whole MDCCSG support "double signature mechanism" which ensures data integrity and credibility of signer identity on two levels (the content and the whole MDCCSG identifier). The Security EL Code and Security EL Info describe quality properties of contents (such as security, credibility, and influence). The Chain of Responsibility can provide source tracing and responsibility investigation. The above core identifier elements can be integrated to achieve "multi-level authentication and registration as well as source tracing and responsibility investigation" while supporting the requirements of big content data sharing and governance.

The computer implemented identification method of content metadata for cyber content sharing and governance further includes:
(1) Achieving high-efficiency content sharing based on MDCCSG identifiers. Corresponding MDCCSG identifiers are firstly established for all the contents, and all the MDCCSG identifiers are distributed to all user terminals in a one-to-many transmission mode. A processing system at each user terminal matches the MDCCSG identifiers in two steps according to user's interest: first step, matching rapidly according to the fields of Source, Category, Subcategory, Topic and the like in the MDCCSG identifier short code to fulfill primary filtering of massive MDCCSG identifiers; second step, further combining Title, Keyword, Abstract, Author, Entity, Copyright, Originality, File Description and the like in the MDCCSG property information from the primarily filtered MDCCSG identifiers to complete deep analysis, personalized precise matching, and intelligent recommendation based on content semantics. The active service efficiency of content sharing applications can be significantly improved from the aspects of distribution efficiency, analysis efficiency, filtering efficiency, recommendation efficiency.
(2) Achieving scientific content governance based on MDCCSG identifiers. In content-governance applications, typically an authoritative central processing system for content governance is pre-installed, and is referred to as a central processing system for short. The central processing system firstly aggregates all the contents within and associated with the application, and performs centralized organization and governance on the MDCCSG identifiers of these contents to form an MDCCSG identifier space covering all the aggregated contents. The contents are mainly aggregated in two manners: in a first manner, the central processing system performs active content collection over the Internet, which is known as an active collection manner; in a second manner, a content provider and an authoritative management organization thereof register the content with the central processing system in a level-by-level authentication manner, which is known as an authentication and registration manner.

For a content acquired by using the active collection manner, its MDCCSG identifier is generated by the central processing system. For a content acquired by using the authentication registration manner, its MDCCSG identifier is typically generated by a content provider or a superior governance organization thereof, and level-by-level authentication and registration is performed on the MDCCSG identifier, till the MDCCSG identifier is eventually authenticated and registered with the central processing system. During the process, the central processing system labels information such as content source, reliability, and importance, together with information such as path of propagation and responsibility subject by means of digital signature in the MDCCSG identifier of the content in aid of the MDCCSG identifier space. Then, the MDCCSG identifiers to be distributed are delivered to the user terminals in the one-to-many transmission mode. After the users receive the MDCCSG identifiers, the authenticity, reliability, and influence of the contents can be determined through the fields of Security EL Info and Security EL Code. Whether the original texts and the MDCCSG identifiers of the contents are tampered can be distinguished through the fields of Signature of Content and Signature of Whole MDCCSG. Law-based source tracing and responsibility investigation can be performed on the contents through the fields of Propagation Path, Chain of Responsibility, Signature of Whole MDCCSG and the like.

It should be noted that, the MDCCSG identification method can be adopted to design and develop various content-centric complex applications, and in these applications, the above two approaches of using MDCCSG identifiers are taken as basis and are usually used cooperatively, to improve content sharing performance and governance capability of the applications.

Beneficial effects: compared with the prior art, the present invention has the following advantages:
1. The present invention is mainly provided to meet the requirements of big content data sharing and governance in Cyberspace. It adopts a uniform content metadata description framework and a uniform specification format to create uniform identifiers on various types of content resources and thus obtains universal MDCCSG identifiers. The encoding formats are highly efficient and flexible, and the specification formats are precise and uniform.
2. The MDCCSG identifier short code and the MDCCSG property information are combined to completely identify content metadata. The core identifier elements cover information such as semantics description, content security and reliability, and concern subject demands of providers, users and governors of the sharing contents, and provide built-in support for content trust authentication, security guarantee and the like. The method is obviously different from the existing identification methods.
3. Various complex content-centric applications can be developed based on the identification method, and high-efficient aggregation and distribution, personalized active service, semantics-based deep analysis, authentication and registration, source tracing and responsibility investigation according to laws on big content data can be effectively supported, while the content sharing performance and governance level of the applications can be significantly improved.

### BRIEF DESCRIPTION OF THE DRAWINGS

FIG. 1 shows a specific description framework of content metadata identifiers adopted by the present invention, which focuses on describing the MDCCSG identifier short code.
FIG. 2 shows a specific specification format of the MDCCSG property information in an MDCCSG identifier.

### Detailed Description of the Embodiments

The present invention is further illustrated below by using specific embodiments. It should be understood that, these embodiments are merely used for illustrating the present invention, instead of limiting the scope of the present invention.

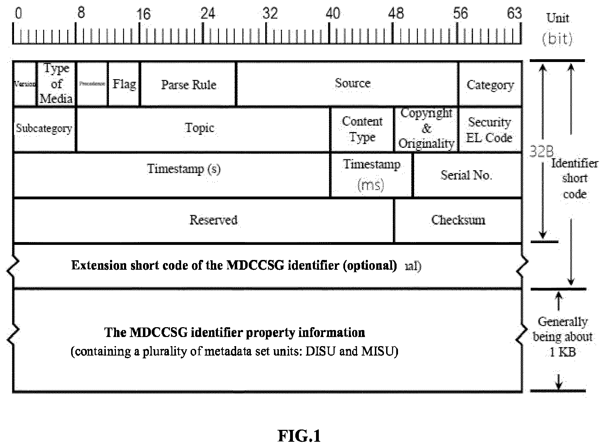

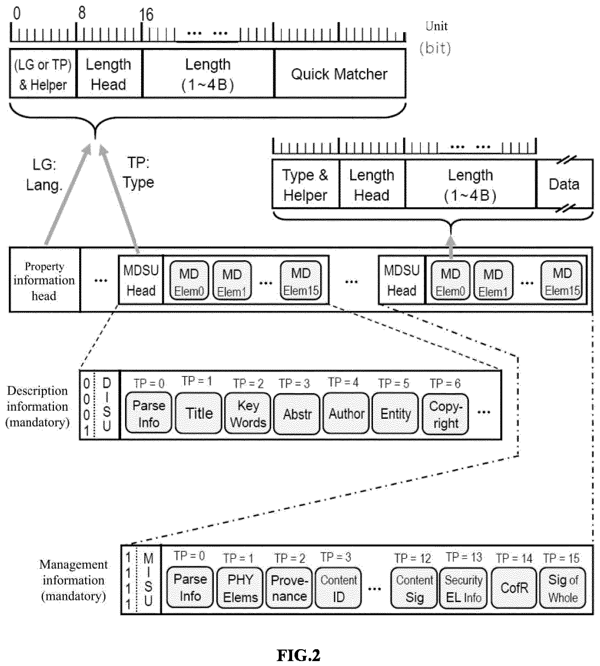

An identification method of content metadata for cyber content sharing and governance (also known as MDCCSG) is provided to meet the environment of cyber content sharing and governance in a big data and pan-media environment, and is suitable for creating uniform identifiers of various types of content resources. The corresponding application method of MDCCSG identifiers can be used to construct group user-oriented content sharing and governance applications in Cyberspace. The MDCCSG identification method mainly includes: a uniform description framework of content metadata, a uniform specification method for content metadata, definition of core MDCCSG identifier elements. The specific implementation is as follows:
1. The uniform description framework of content metadata. According to the MDCCSG identification method, an MDCCSG identifier is generated for each piece of content, as shown in FIG. 1. The MDCCSG identifier includes two parts: an MDCCSG identifier short code and an MDCCSG property information. The MDCCSG identifier short code is a fixed-length part of the MDCCSG identifier, and is located at the front of the whole MDCCSG identifier. Typically, the MDCCSG identifier short code only contains a basic short code with a standard length of 32 bytes; and in applications, if necessary, extension short code with a length of an integer multiple of 16 byte is placed closely after the basic short codes (32 bytes), and the extension short codes still belongs to the MDCCSG identifier short code.
   The MDCCSG property information is a flexible and variable-length part of the MDCCSG identifier, and is located after the MDCCSG identifier short code. The specific MDCCSG property information description framework is shown in FIG. 2. The MDCCSG property information is a container capable of containing 2 to 16 MDSUs. Each MDSU is also a container capable of containing 1 to 16 MDEs. The MDCCSG property information generally only contains two compulsory MDSUs: a DISU and an MISU. The DISU mainly describes basic properties, semantic information and the like of contents. The MISU mainly describes property information related to content governance, and especially focuses on information in the aspects of content trust authentication, security guarantee and the like.
2. The uniform specification method for content metadata. To enable high-efficient distribution and sharing of big content data, the MDCCSG identification method requires that each MDCCSG identifier is concise and compact, normative and precise, and easy to parse, and contains necessary metadata identification information while having its normal length being about 1 kilobyte (KB). Therefore, the MDCCSG identifier highlights highly-efficient and flexible encoding and precise and uniform specification formats. The MDCCSG identification method does not use XML-based encoding that is widely adopted in conventional content identifications, but adopts binary integers to describe a plurality of key fields in the MDCCSG identifier short code, as shown in FIG. 1, thereby making full use of 32 bytes and realizing compact encoding. In the MDCCSG property information, a container-based classification and collection method is adopted to ensure simplicity, normalization and preciseness of encoding/decoding, as shown in FIG. 2. Meanwhile, the MDCCSG identifier also has flexible extension capability.
   The main encoding and specification formats of MDCCSG identifiers are classified into four types: fields in the identifier short code, MDSU head, MDE head and MDE body, and the format of the MDSU head is similar to that of the MDE head, and the head of the MDCCSG property information is also defined based on the MDSU head. The fields in the identifier short code are coded and specified by using binary integers in bits, referring to FIG. 1. The encoding and specification formats of the MDSU head, the MDE head, and the MDE body are shown in FIG. 2. In the first byte of the MDSU head and MDE head, the first 4 bits are used for specifying the type number (Type), but in the head of the MDCCSG property information, the first 4 bits are used for specifying the language type (Language) of the MDCCSG identifier; and the last 4 bits are used for specifying decoding auxiliary information (Helper). The main difference between the MDSU head and the MDE head lies in that, a quick-match information (Quick Matcher) of 2 bytes is placed at the end of the MDSU head for rapidly indicating what types of MDEs are collected by this MDSU specifically. Of course, in the head of the MDCCSG property information, a Quick Matcher of 2 bytes at the end is used for rapidly indicating what types of MDSUs are specifically collected.
   In addition, each MDCCSG identifier also follows several consistency rules and description agreements (referring to FIG. 2). For example, all the MDSUs and MDEs with the type number 0 (that is, Type = 0) are reserved for enabling a user to introduce parse information related to encoding/decoding on demand to ensure the MDCCSG identifier is more flexible. In addition, the type number of the DISU is 1 and the type number of the MISU is 15, and it is ensured that the MISU is always the last MDSU of the MDCCSG property information, and thus it is ensured that the MISU can give digital signature for the whole MDCCSG identifier by using its last MDE (that is, the field of Signature of Whole MDCCSG).
3. The definition of core MDCCSG identifier elements. Different from other conventional identification methods, the MDCCSG identification method covers information of semantics description of content, trust authentication and security guarantee, to form a universal and standard MDCCSG identifier. The MDCCSG identification method respectively selects and defines several core metadata identifier elements (referred to as MDCCSG identifier elements, or referred to as identifier elements for short) for the MDCCSG identifier short code and the MDCCSG property information. The core metadata identifier elements mainly include: (1) core identifier elements in the MDCCSG identifier short code; (2) core identifier elements in the MDCCSG property information; (3) core identifier elements supporting trust authentication and security guarantee. Wherein (3) is synthesizes (1) and (2) to highlights the concept of security EL of MDCCSG identifiers as well as functions of content trust authentication and security guarantee.

It should be noted that, although the core identifier elements mentioned in the following embodiments mainly follow the definition of MDCCSG identifiers in Version v1, the present invention apparently includes similar modifications inspired by the present invention.
(1) Core identifier elements in the MDCCSG identifier short code (referring to FIG. 1):
   Version: occupying 3 bits, and used for describing the version number of an MDCCSG identifier. The current version number is 001 (wherein 000 is reserved), representing Version v1 of the MDCCSG identifiers.
   Type of Media: occupying 5 bits, and used for describing the media type of the content.
   Precedence: occupying 4 bits, and used for describing the priority and urgency of the content.
   Flag: occupying 4 bits, and used for indicating whether information such as extension short code follows.
   Parse Rule: occupying 12 bits, and used for indicating the necessary parse rule adhered by the MDCCSG identifier.
   Source: occupying 28 bits, and used for describing source information of the content.
   Category: occupying 8 bits, and used for describing the category to which the content belongs.
   Subcategory: occupying 8 bits, and used for describing the subcategory to which the content belongs.
   Topic: occupying 32 bits, and used for describing topic information related to the content.
   Content Type: occupying 8 bits, and used for describing the language and type information of the content (such as audios, videos, characters, pictures, and new media, etc.).
   Copyright & Originality: occupying 8 bits, and used for describing whether the content contains copyright statement and whether the content is original.
   Security EL Code: occupying 8 bits, and used for describing information of a content in terms of authentication level, security, trust, and influence.
   Timestamp in Seconds: occupying 40 bits, and used for describing the elapsing seconds from a start time point to a timestamp extraction time point in a time system standard (GPS, BeiDou, POSIX and the like).
   Timestamp in Milliseconds: occupying 10 bits, and used for describing the millisecond-level precision timestamp within the second recorded by the field of Timestamp in Seconds.
   Serial No.: occupying 14 bits, and used for describing a serial number allocated to an MDCCSG identifier during registration. The Serial No. must be used in combination with Timestamp in Seconds and Timestamp in Milliseconds.
   Checksum: occupying 16 bits, and used for describing a checksum of the remaining 30 bytes obtained by removing the field of Checksum (2 bytes) from the basic short code (32 bytes) in the MDCCSG identifier short code.
(2) Core identifier elements in the MDCCSG property information (referring to FIG. 2).
   The MDCCSG property information must include two MDSUs (typically only including these two MDSUs): a DISU (its type number is 1) and an MISU (its type number is 15), and each contains the following core identifier elements respectively.
   The DISU mainly contains the following core identifier elements (the type number below refers to the type number in the DISU):
   Title: the allocated type number is 1, and used for describing the headline or title information of the content.
   Keyword: the allocated type number is 2, and used for describing several words or phrases that can reflect the theme and outline of the content.
   Abstract: the allocated type number is 3, and used for describing content outline information that can reflect the subject, general idea and theme of the content.
   Author: the allocated type number is 4, and used for describing the creator or organization information of the content.
   Entity: the allocated type number is 5, and mainly used for describing "5W"-based named entity information, including who, when, where, what, why.
   Copyright: the allocated type number is 6, and used for describing content-related copyright information, which generally includes various property right statements, such as intellectual property right statement.
   Originality: the allocated type number is 7, and used for describing whether a content is original and describing information such as the specific creator (or organization).
   File Description: the allocated type number is 8, and mainly used for describing type, format, size and the like of the file of the content.

   The MISU mainly contains the following core identifier elements (the type number below refers to the type number in the MISU):
   Physical Elements: the allocated type number is 1, and used for describing important information of physical dimensions related to creation, transmission and receiving of the content.
   Provenance: the allocated type number is 2, and used for describing the original source information of the content.
   Content ID: the allocated type number is 3, and used for describing content-related identifier that conform to other standard systems, for example, a URI, a DOI and the like.
   Propagation Path: the allocated type number is 4, and used for describing the path information of the content during its propagation.
   Signature of Content: the allocated type number is 12, and used for storing digital signature information about the content itself.
   Security EL Info: the allocated type number is 13, and used for describing quality property information (such as security, reliability, and influence) of the content.
   Chain of Responsibility: the allocated type number is 14, and used for describing responsibility subject information for each level in a multi-level authentication and registration process of the content.
   Signature of Whole MDCCSG: the allocated type number is 15, and used for storing digital signature information of a whole MDCCSG identifier.
(3) Core identifier elements supporting trust authentication and security guarantee (referring to FIG. 1 and FIG. 2).

The MDCCSG identifier describes in details rich semantic information of a content, and provides built-in support for content trust authentication, security guarantee and the like, and also originally introduces the security EL concept, which are innovative features of the MDCCSG identification method as being obviously different from conventional identification methods. The MDCCSG identification method particularly adds several core identifier elements for content security and trust, which are shown in the MDCCSG identifier short code and the MDCCSG property information. The core identifier element in the MDCCSG identifier short code is mainly the Security EL Code. The core identifier elements in the MDCCSG property information are mainly Physical Elements, Signature of Content, Security EL Info, Chain of Responsibility, Signature of Whole MDCCSG and the like.

The Security EL Code is a simplified description of the Security EL Info, and is mainly used for a content user to indicate information such as authentication level, security, reliability, and influence of a content. Though the Security EL Code is simple, it is quite necessary and helps the content user to adopt secure and rational policies for reading and accepting. The Physical Elements mainly focus on description of related physical dimension information during creation, transmission and receiving of a content, and the physical dimension information mainly includes: time (absolute time), space (longitude, dimension, altitude and the like in navigation or positioning), people (electronic identity information of authorized people), thing (related specific thing), object (related hardware device information) and the like.

The Signature of Content and the Signature of Whole MDCCSG are cooperated to show the feature of "double-signature mechanism" of the MDCCSG identifier: together ensuring data integrity (tamper-proofing) and credibility (non-repudiation) of signer identity of the content itself and the whole MDCCSG identifier. The Security EL Info mainly describes quality properties of a content, including security authentication level, authenticity, one-sidedness, influence degree and range of the content. The Chain of Responsibility and the Signature of Whole MDCCSG are used cooperatively to show the feature of "multi-level authentication and registration as well as source tracing and responsibility investigation" of the MDCCSG identifier: in a multi-level authentication registration process, responsibility subject at each level of authentication registration adds its identity information into the Chain of Responsibility and then generates the Signature of Whole MDCCSG; and once a content needs responsibility investigation, the Chain of Responsibility can be directly checked to determine level-by-level which subjects should take responsibility.

An application method of the content metadata for cyber content sharing and governance is a corresponding application method of the MDCCSG identifiers. Various group user-oriented cyber content sharing and governance applications in Cyberspace can be developed based on the MDCCSG identifiers, and high-efficiency sharing and governance of big content data can be effectively supported. The application methods of MDCCSG identifiers are exemplified below by using two types of typical applications. It should be noted that, the two application methods are usually inseparable and need to be used cooperatively in normal sharing and governance applications of big content data.
(1) Achieving high-efficiency content sharing based on MDCCSG identifiers
   It is assumed that an Internet content provider (ICP) develops a public-oriented news push application based on MDCCSG identifiers, and that an application program (APP) capable of processing MDCCSG identifiers has been installed at the terminals of users. The APP has functions such as user customization, interest perception, personalized recommendation etc..
   The ICP firstly creates corresponding MDCCSG identifiers for all news contents, and then broadcasts the news contents and their MDCCSG identifiers to all terminals of users. After receiving massive and continuously distributed news contents and MDCCSG identifiers, the user-side APP firstly performs, based on the customization information or users' interests perceived by the APP, quick matching according to the fields of Source, Category, Subcategory and Topic in the MDCCSG identifier short code to achieve primary filtering of the massive MDCCSG identifiers. Next, the APP further combines the fields of Title, Keyword, Abstract, Author, Entity, Copyright, Originality and File Description in the MDCCSG property information to perform semantics-based deep analysis, personalized precise matching, intelligent recommendation and the like on the filtered MDCCSG identifiers, and then sends the feedback to the users. If a user satisfies the MDCCSG identifiers matched with his/her interests or recommended by the APP, the APP displays the corresponding news contents to the user. This can not only ensure the efficiency of news distribution and process for group users but also meet the personalized requirements of users.
(2) Achieving content governance based on MDCCSG identifiers

A typical but relatively simplified content governance application scenario is described in the following. It is assumed that a public opinion governance organization is responsible for governing a plurality of ICPs, and each ICP governs a plurality of content creators (CCs). The public opinion governance organization develops a public opinion analysis application based on MDCCSG identifiers. It is also assumed that the public opinion analysis application includes an APP capable of processing MDCCSG identifiers. The APP can create a standard MDCCSG identifier for each content, and also has functions of MDCCSG identifier check and modification. The APP is pre-installed in the application systems of all the ICPs and CCs.

Firstly, when creating a new content (including professional news contents or various We-Media contents, labeled as *cont*), each CC generates, by using the APP, a corresponding MDCCSG identifier (labeled as *mdi*) which contains a signature for the *cont* made by the CC using its private key, personal identity information of the CC that is recorded in the field of Chain of Responsibility, and a signature for the whole *mdi* made by the CC using its private key (referring to the double-signature for the first time). Next, when issuing the *cont,* the CC submits the *cont* and the corresponding *mdi* to its superior governance ICP for authentication and registration. Once received an authentication and registration request from the CC, the ICP immediately performs authentication and check on the *mdi* by using the APP according to information such as the *cont.* If the check is successful, the ICP re-modifies some related information in the *mdi,* and records the identity information of itself into the field of Chain of Responsibility, and then signs the whole *mdi* by using a private key of the ICP itself (referring to the double-signature for the second time). After that, the ICP submits the *cont* and the newest *mdi* to a central processing system of the public opinion governance organization for authentication registration.

Subsequently, the central processing system performs, according to its MDCCSG identifier space, stricter authentication and check on the *mdi.* If the check is passed, the central processing system re-modifies some related information in the *mdi,* and records additionally the identity information of the public opinion governance organization into the field of Chain of Responsibility, and then signs the whole *mdi* by using a private key of the public opinion governance organization (referring to the double-signature for the third time) to complete authentication and registration of the *cont* and the *mdi.* If the check is not passed due to the requirement of responsibility investigation, the central processing system can perform, based on information such as Chain of Responsibility in the *mdi,* level-by-level responsibility investigation according to laws. In this way, a "multi-level authentication registration as well as source tracing and responsibility investigation" mechanism based on MDCCSG identifiers can be established. Definitely, in the above process, deep governance based on semantics and content trust authentication can be performed in combination with the MDCCSG identifier space of the central processing system and the fields of Security EL Code and Security EL Info and the like in the *mdi* by using such existing methods and technologies as knowledge mining, entity linking, deep learning neural networks and the like.

## Claims

1. A computer implemented identification method of content metadata for cyber content sharing and governance (MDCCSG), comprising:
a central processing system aggregating all the contents within and associated with a content sharing application;
generating a content metadata identifier with a uniform format, also referred to as an MDCCSG identifier;
wherein the MDCCSG identifier comprises an MDCCSG identifier short code, an MDCCSG property information and a plurality of core content metadata identifier elements, wherein the MDCCSG identifier short code lies in the front of the whole MDCCSG identifier, wherein the MDCCSG identifier short code has a standard length of 32 bytes; wherein different encoding specification formats are adopted respectively for the MDCCSG identifier short code and the MDCCSG property information; in the MDCCSG identifier short code, 32 bytes are fully utilized to define the bit-based content metadata information and a plurality of key fields is described by binary integers, and the description focuses on content semantics and security information; in the MDCCSG property information, a plurality of metadata elements (MDEs) are categorized and collected by metadata set units (MDSUs);
wherein flexibility and extensibility of MDCCSG identifiers are ensured by reservation and on-demand extension;
wherein the MDCCSG property information closely follows the MDCCSG identifier short code, and contains a plurality of MDSUs; each MDSU contains a plurality of MDEs, and each MDE describing one aspect of property information associated with the content; and the MDCCSG property information contains two compulsory key MDSUs: a description information set unit (DISU) and a management information set unit (MISU), wherein the DISU focuses on describing the basic properties and semantic information of the content; and the MISU focuses on describing important property information related to cyber content management and governance, and
wherein the plurality of core content metadata identifier elements are selected, and these core content metadata identifier elements cover semantic description information, trust authentication and security guarantee information of the content, and security energy level (EL) identifier elements reflecting content quality properties are created at the same time, and "double-signature mechanism" and "multi-level authentication and registration as well as source tracing and responsibility investigation" functions are supported by adding identify information of each responsibility subject at each level of authentication into a chain of responsibility and generating a signature of whole.

2. The computer implemented identification method of content metadata for cyber content sharing and governance according to claim 1, wherein the MDCCSG identifier short code consists of a plurality of fields, these fields store several content-related key information description codes, also known as basic short code; in addition, the MDCCSG identifier short code also has an extension part, which contains extension information description codes, also known as extension short code, the extension short code has a length of an integer multiple of 16 bytes, and is used for storing extension fields other than the basic short code; the basic short code and the extension short code are collectively referred to as the MDCCSG identifier short code.

3. The computer implemented identification method of content metadata for cyber content sharing and governance according to claim 1, wherein the main specification formats of the MDCCSG identifiers are classified into the following four types: fields in the MDCCSG identifier short code, specified by using binary integers in bits; an MDSU head with a length of 5 to 8 bytes mainly specifying type number of the MDSU, number of MDEs, total length of all MDEs, MDE Quick Matcher and the like; an MDE Head with a length of 3 to 6 bytes mainly specifying type number of the MDE, number of members, MDE body length and the like; an MDE body occupying a plurality of bytes that describe the specific value of MDE itself, and the head of the MDCCSG property information also utilizes a specification format similar to the MDSU head.

4. The computer implemented identification method of content metadata for cyber content sharing and governance according to claim 1, wherein the definition of core MDCCSG identifier elements specifically comprises:
(1) core identifier elements in the MDCCSG identifier short code: the first key identifier element of this part is Version, occupying 3 bits, and used for describing the version number of an MDCCSG identifier; the core identifier elements in the MDCCSG identifier short code further comprise: Type of Media, Precedence, Flag, Parse Rule, Source, Category, Subcategory, Topic, Content Type, Copyright & Originality, Security EL Code, Timestamp in Seconds, Timestamp in Milliseconds, Serial No., and Checksum; in addition, 6 bytes are reserved in the part following the Serial No. and before the Checksum;
(2) core identifier elements in the MDCCSG property information: this part adopts MDSU to categorize and collect the MDCCSG identifier elements, and there exist mainly three types of MDSUs, namely, a DISU, an MISU, and an extension information set unit (EISU), where the DISU and the MISU are compulsory identification items; the core identifier elements collected by the DISU comprise: Title, Keyword, Abstract, Author, Entity, Copyright, Originality, and File Description; the core identifier elements collected by the MISU comprise: Physical Elements, Provenance, Content ID, Propagation Path, Signature of Content, Security EL Info, Chain of Responsibility, and Signature of Whole MDCCSG; each core identifier element is an MDE having an MDE head of the same format, and the defining the position, sequence, type number and the like of the core identifier elements are specified;
(3) core identifier elements supporting trust authentication and security guarantee: a built-in support for content trust authentication and security guarantee is provided by synthesizing the identifier elements in the MDCCSG identifier; the related core identifier elements mainly comprise: Security EL Code (a simplified description of Security EL Info) in the MDCCSG identifier short code; Physical Elements, Signature of Content, Security EL Info, Chain of Responsibility, and Signature of Whole MDCCSG in the MDCCSG property information; wherein the Physical Elements focus on description of such physical dimension information as "time, space, people, thing, object"; and the fields of Signature of Content and Signature of Whole MDCCSG support "double-signature mechanism", which ensures data integrity and credibility of signer identity on the content itself and the whole MDCCSG identifier; and the fields of Security EL Code and Security EL Info describe the quality properties of the content itself; and the field of Chain of Responsibility is capable of providing source tracing and responsibility investigation; by combining these identifier elements, functions of "multi-level authentication and registration + source tracing and responsibility investigation" can be achieved while supporting the requirements of cyber big content data sharing and governance.

5. The computer implemented identification method of content metadata for cyber content sharing and governance (MDCCSG) of claim 1, further comprising:
distributing, by the content sharing application, all the MDCCSG identifiers to all user terminals of the content sharing application in a one-to-many transmission mode;
matching the MDCCSG identifiers by a processing system at each user terminal in two steps according to interests of user:
in a first step, performing quick matching according to the MDCCSG identifier short code of the content metadata to complete a primary filtering of massive MDCCSG identifiers;
in a second step, in the primarily filtered MDCCSG identifiers, further combining their MDCCSG property information of the content metadata to complete the semantics-based analysis, personalized matching and active recommendation.

6. The computer implemented identification method of content metadata for cyber content sharing and governance (MDCCSG) of claim 1,
wherein the central processing system comprises a content governance application for content governance;
wherein the method further comprises:
aggregating firstly all contents of user terminals within and associated with the application and performing centralized organization and governance on the MDCCSG identifiers of the contents by the central processing system, to form an MDCCSG identifier space covering all the aggregated contents;
subsequently, for each content submitted for authentication and registration, marking digital signature, content source, credibility, importance information, together with the propagation path and responsibility subject information into the MDCCSG identifier of the content with the help of the MDCCSG identifier space by the central processing system;
transmitting the MDCCSG identifiers to be distributed to the user terminals in a one-to-many transmission mode;
after the user receives the MDCCSG identifiers, judging the authenticity, credibility, and influence of the contents by using the fields of Security EL Info of the content metadata and Security EL Code of the content metadata.

7. The computer implemented identification method of content metadata for cyber content sharing and governance (MDCCSG) of claim 1, wherein in the step of aggregating all the contents within and associated with a content sharing application, the contents are mainly aggregated in two manners: in a first manner, the central processing system performs active content collection over the Internet, which is referred to as an active collection; in a second manner, a content provider and its superior governance organization register the content with the central processing system in a level-by-level authentication, which is referred to as an authentication and registration collection;
for a content acquired by using the active collection, its MDCCSG identifier is generated by the central processing system; for a content acquired by using the authentication and registration collection, its MDCCSG identifier is typically generated by the content provider and its superior governance organization, and the MDCCSG identifier is not authenticated and registered level-by-level until it is eventually authenticated and registered with the central processing system;
the "double-signature mechanism" must be implemented on the MDCCSG identifier of each content, the data integrity of the content itself and identity non-repudiation of signer are ensured by using the Signature of Content; the data integrity of the whole MDCCSG identifier and identity non-repudiation of signer are ensured by using the Signature of Whole MDCCSG; furthermore, the functions of "multi-level authentication registration as well as source tracing and responsibility investigation" can be implemented based on the "double-signature mechanism".

## Patentansprüche

1. Computer-implementiertes Identifikationsverfahren von Inhalts-Metadaten für die gemeinsame Nutzung und Regelung von Cyber-Inhalt (MDCCSG), umfassend:
eine zentrales Verarbeitungssystem, welches sämtliche Inhalte, sie sich innerhalb einer Anwendung zum Teilen von Inhalten befinden und dieser zugeordnet sind, aggregiert;
Erzeugen einer Inhaltsmetadatenkennung mit einem einheitlichen Format, welche auch als MDCCSG-Kennung bezeichnet wird;
wobei die MDCCSG-Kennung einen MDCCSG-Kennungs-Kurzcode, eine MDCCSG-Eigenschaftsinformation und eine Vielzahl von KerninhaltsmetadatenKennungselementen aufweist, wobei der MDCCSG-Kennungs-Kurzcode im vorderen Bereich der gesamten MDCCSG-Kennung liegt, wobei der MDCCSG-Kennungs-Kurzcode eine Standardlänge von 32 Byte aufweist, wobei unterschiedliche Kodierungsspezifikationsformate jeweils für den MDCCSG-Kurzcode und die MDCCSG-Eigenschaftsinformation angewendet werden; in dem MDCCSG-Kennungs-Kurzcode 32 Byte vollständig dazu verwendet werden, um die Bit-basierten Inhaltsmetadateninformationen zu definieren, und eine Vielzahl von Schlüsselfeldern durch binäre ganze Zahlen beschrieben wird, und sich die Beschreibung auf Inhaltssemantik und Sicherheitsinformationen fokussiert; in den MDCCSG-Eigenschaftsinformationen eine Vielzahl von Metadatenelementen (MDEs) durch Metadatensatzeinheit (MDSUs) kategorisiert und gesammelt werden;
wobei Flexibilität und Erweiterbarkeit von MDCCSG-Kennungen durch Reservierung und Erweiterung bei Bedarf sichergestellt werden;
wobei die MDCCSG-Eigenschaftsinformationen dem MDCCSG-Kennungs-Kurzcode eng folgt, und eine Vielzahl von MDSUs enthält; jede MDSU eine Vielzahl von MDEs enthält, und jede MDE einen Aspekt von Eigenschaftsinformationen beschreibt, die dem Inhalt zugeordnet ist; und die MDCCSG-Eigenschaftsinformationen zwei obligatorische Schlüssel-MDSUs enthält: eine Beschreibungsinformationssatzeinheit (DISU) und eine Verwaltungsinformationssatzeinheit (MISU), wobei sich die DISU auf das Beschreiben der grundlegenden Eigenschaften und semantischen Informationen des Inhalts fokussiert; und sich die MISU auf das Beschreiben von wichtigen Eigenschaftsinformationen in Bezug auf Cyber-Content-Management und -Regelung bezieht, und
wobei die Vielzahl von Kerninhaltsmetadatenkennungselementen ausgewählt wird, und diese Kerninhaltsmetadatenkennungselemente semantische Beschreibungsinformationen, Vertrauensauthentifizierung und Sicherheitsgarantieinformationen des Inhalts abdecken, und Sicherheitsenergieebenen (EL)-Kennungselemente, die Inhaltsqualitätseigenschaften widerspiegeln, zur gleichen Zeit erzeugt werden, und "Doppelsignaturmechanismus" und "Multilevel-Authentifizierung und Registrierung sowie Quellen-Verfolgung und Verantwortungsuntersuchung"-Funktionen unterstützt werden, indem Kennungsinformationen von jedem Verantwortungsobj ekt auf jeder Ebene der Authentifizierung in eine Kette an Verantwortung hinzugefügt werden und eine Signatur des Ganzen erzeugt wird.

2. Computer-implementiertes Identifikationsverfahren von Inhalts-Metadaten für die gemeinsame Nutzung und Regelung von Cyber-Inhalt nach Anspruch 1, wobei der MDCCSG-Kennungskurzcode aus einer Vielzahl von Feldern besteht, diese Felder mehrere inhaltsbezogene Schlüsselinformationsbeschreibungscodes speichern, auch als Basis-Kurzcode bekannt; der MDCCSG-Kennungs-Kurzcode zudem einen Erweiterungsteil aufweist, der Erweiterungsinformationsbeschreibungscodes enthält, auch als Erweiterungs-Kurzcode bekannt, der Erweiterungs-Kurzcode eine Länge eines ganzzahligen Vielfachen von 16 Bytes aufweist und zum Speichern von Erweiterungsfeldern verwendet wird, die sich von dem Basis-Kurzcode unterscheiden; der Basis-Kurzcode und der Erweiterungs-Kurzcode kollektiv als der MDCCSG-Kennungs-Kurzcode bezeichnet werden.

3. Computer-implementiertes Identifikationsverfahren für Inhaltsmetadaten für die gemeinsame Nutzung und Regelung von Cyber-Inhalt nach Anspruch 1, wobei die Hauptspezifikationsformate der MDCCSG-Kennungen in die folgenden vier Typen klassifiziert sind: Felder in dem Kurzcode der MDCCSG-Kennungen, die unter Verwendung binärer Ganzzahlen in Bits spezifiziert sind; ein MDSU-Kopf mit einer Länge von 5 bis 8 Bytes, die hauptsächlich die Typennummer der MDSU, die Anzahl von MDEs, die Gesamtlänge aller MDEs, MDE-Quick-Matcher und dergleichen spezifizieren; ein MDE-Kopf mit einer Länge von 3 bis 6 Bytes, die hauptsächlich die Typennummer der MDE, die Anzahl von Elementen, die MDE-Körperlänge und dergleichen spezifizieren; ein MDE-Körper, der eine Vielzahl von Bytes belegt, die den spezifischen Wert der MDE selbst beschreiben, und der Kopf der MDCCSG-Eigenschaftsinformationen auch ein Spezifikationsformat verwendet, das dem MDSU-Kopf ähnlich ist.

4. Computer-implementiertes Identifikationsverfahren von Inhalts-Metadaten für die gemeinsame Nutzung und Regelung von Cyber-Inhalt nach Anspruch 1, wobei die Definition von Kern-MDCCSG-Kennungselementen insbesondere umfasst:
(1) Kernkennungselemente in dem Kurzcode der MDCCSG-Kennung: das erste Schlüsselkennungselement dieses Teils ist eine Version, die 3 Bits belegt und zum Beschreiben der Versionsnummer eines MDCCSG-Kennung verwendet wird; die Kernkennungselemente in dem Kurzcode des MDCCSG-Kennung umfassen ferner: Medientyp, Herkunft, Flag, Parse-Regel, Quelle, Kategorie, Subkategorie, Thema, Inhaltstyp, Copyright & Originalität, Sicherheits-EL-Code, Zeitstempel in Sekunden, Zeitstempel in Millisekunden, Seriennummer und Prüfsumme; zusätzlich sind 6 Bytes in dem Teil nach der Seriennummer und vor der Prüfsumme reserviert;
(2) Kernkennungselemente in den MDCCSG-Eigenschaftsinformationen: dieser Teil übernimmt MDSU, um die MDCCSG-Kennungselemente zu kategorisieren und zu sammeln, und es existieren hauptsächlich drei Typen von MDSU, nämlich eine DISU, eine MISU und eine Erweiterungsinformationseinstelleinheit (EISU), wobei die DISU und die MISU obligatorische Kennungselemente sind; die Kernkennungselemente, die von der DISU gesammelt werden, umfassen: Titel, Schlüsselwort, Zusammenfassung, Autor, Entität, Copyright, Originalität und Dateibeschreibung; die Kernkennungselemente, die von der MISU gesammelt werden, umfassen: physische Elemente, Herkunft, Inhalts-ID, Ausbreitungsweg, Signatur des Inhalts, Sicherheits-EL-Info, Reaktionskette und Signatur des gesamten MDCCSG; jedes Kernkennungselement ist ein MDE mit einem MDE-Kopf des gleichen Formats, und das Definieren der Position, Sequenz, Typennummer und dergleichen der Kernkennungselemente wird spezifiziert;
(3) Kernkennungselemente, die Vertrauensauthentifizierung und Sicherheitsgarantie unterstützen: eine eingebaute Unterstützung für Inhaltsvertrauensauthentifizierung und Sicherheitsgarantie wird bereitgestellt, indem die Kennungselemente in der MDCCSG-Kennung synthetisiert werden; die zugehörigen Kernkennungselemente hauptsächlich umfassen: einen Sicherheits-EL-Code (eine vereinfachte Beschreibung von Sicherheits-EL-Info) in dem Kurzcode der MDCCSG-Kennung; physische Elemente, Inhaltssignatur, Sicherheits-EL-Info, Verantwortungskette und Signatur des gesamten MDCCSG in den MDCCSG-Eigenschaftsinformationen; wobei sich die physischen Elemente auf die Beschreibung solcher physischen Dimensionsinformationen wie "Zeit, Raum, Menschen, Sache, Objekt" konzentrieren; und die Felder der Signatur des Inhalts und der Signatur des gesamten MDCCSG unterstützen den "Doppel-Signatur-Mechanismus", der die Datenintegrität und Glaubwürdigkeit der Signierer-Identität auf dem Inhalt selbst und der gesamten MDCCSG-Kennung sicherstellt; und die Felder Sicherheits-EL-Code und Sicherheits-EL-Info die Qualitätseigenschaften des Inhalts selbst beschreiben; und das Gebiet der Reaktionsfähigkeitskette in der Lage ist, Quellenverfolgungs- und Verantwortungsuntersuchungen bereitzustellen; durch Kombinieren dieser Kennungselemente können Funktionen einer Mehrebenen-Authentifizierung und -Registrierung + Quellenverfolgung und Verantwortungsuntersuchung" erreicht werden, während die Anforderungen einer Cyber-Big-Content-Datenteilung und -Regelung unterstützt werden.

5. Computer-implementiertes Identifikationsverfahren von Inhalts-Metadaten für die gemeinsame Nutzung und Regelung von Cyber-Inhalt (MDCCSG) nach Anspruch 1, ferner umfassend:
Verteilen, durch die Anwendung zum Teilen von Inhalt, sämtlicher MDCCSG-Kennungen an alle Nutzer-Endgeräte der Anwendung zum Teilen von Inhalt in einem Einer-an-Viele-Übertragungsmodus;
Abgleichen der MDCCSG-Kennungen durch ein Verarbeitungssystem an jedem Nutzerendgerät in zwei Schritten gemäß Interesse von Nutzer:
in einem ersten Schritt, Durchführen von schnellem Abgleichen gemäß des MDCCSG-Kennungskurzcodes der Inhaltsmetadaten, um ein primäres Filtern von massiven MDCCSG-Kennungen abzuschließen;
in einem zweiten Schritt, in den vorläufig gefilterten MDCCSG-Kennungen, ferner Kombinieren derer MDCCSG-Eigenschaftsinformationen der Inhaltsmetadaten, um die Semantik-basierte Analyse, personalisiertes Abgleichen und aktive Empfehlung abzuschließen.

6. Computer-implementiertes Identifikationsverfahren von Inhalts-Metadaten für die gemeinsame Nutzung und Regelung von Cyber-Inhalt (MDCCSG) nach Anspruch 1,
wobei das zentrale Verarbeitungssystem eine Inhaltsregelungsanwendung zur Inhaltsregelung aufweist;
wobei das Verfahren ferner umfasst:
zunächst Aggregieren sämtlicher Inhalte von Nutzerendgeräten, die sich innerhalb der Anwendung befinden und dieser zugeordnet sind, und Durchführen einer zentralisierten Organisation und Regelung auf den MDCCSG-Kennungen der Inhalte durch das zentrale Verarbeitungssystem, um einen MDCCSG-Kennungsraum zu bilden, der sämtliche aggregierte Inhalte abdeckt;
anschließend, für jeden Inhalt, der zur Authentifizierung und Registrierung übermittelt wird, Markieren einer digitalen Signatur, Inhaltsquelle, Glaubwürdigkeit, Wichtigkeitsinformationen, zusammen mit dem Ausbreitungsweg und Verantwortungsobjektinformationen in die MDCCSG-Kennung des Inhalts mit der Hilfe des MDCCSG-Kennungsraums durch das zentrale Verarbeitungssystem;
Übertragen der MDCCSG-Kennungen, die an die Nutzerendgeräte übertragen werden sollen, in einem Einer-an-Viele-Übertragungsmodus;
nachdem der Nutzer die MDCCSG-Kennungen empfängt, Beurteilen der Authentizität, Glaubwürdigkeit, und Einfluss der Inhalte unter Verwendung der Felder von Sicherheits-EL-Info der Inhaltsmetadaten und Sicherheits-El-Code der Inhaltsmetadaten.

7. Computer-implementiertes Identifikationsverfahren von Inhalts-Metadaten für die gemeinsame Nutzung und Regelung von Cyber-Inhalt (MDCCSG) nach Anspruch 1, wobei in dem Schritt des Aggregierens sämtlicher Inhalte, die sich innerhalb der Anwendung zum Teilen von Inhalt befinden und dieser zugeordnet sind, die Inhalte hauptsächlich auf zwei Weisen aggregiert werden: auf eine erste Weise führt das zentrale Verarbeitungssystem eine aktive Inhaltssammlung über das Internet durch, die als eine aktive Sammlung bezeichnet wird; in einer zweiten Weise registrieren ein Inhaltsanbieter und seine übergeordnete Organisation für die Regulierung den Inhalt mit dem zentralen Verarbeitungssystem in einer Ebenen-basierten Authentifizierung, die als Authentifizierungs- und Registrierungssammlung bezeichnet wird;
für einen Inhalt, der unter Verwendung der aktiven Sammlung erworben wurde, wird seine MDCCSG-Kennung durch das zentrale Verarbeitungssystem erzeugt; für einen Inhalt, der unter Verwendung der Authentifizierungs- und Registrierungssammlung erworben wurde, wird seine MDCCSG -Kennung typischerweise durch den Inhaltsanbieter und seine übergeordnete Regulierungsorganisation erzeugt, und die MDCCSG -Kennung wird nicht Ebenen-basiert authentifiziert und registriert, bis sie schließlich bei dem zentralen Verarbeitungssystem authentifiziert und registriert wird;
der "Doppel-Signatur-Mechanismus" muss auf der MDCCSG-Kennung jedes Inhalts implementiert werden, die Datenintegrität des Inhalts selbst und die Nicht-Antwort der Identität des Signierers werden durch Verwendung der Signatur des Inhalts sichergestellt; die Datenintegrität der gesamten MDCCSG-Kennung und die Nicht-Beantwortung der Identität des Signierers werden durch Verwendung der Signatur der gesamten MDCCSG sichergestellt; ferner können die Funktionen der "Mehr-Ebenen-Authentifizierungsregistrierung sowie Quellenverfolgung und Verantwortungsuntersuchung" basierend auf dem "Doppelsignaturmechanismus" implementiert werden.

## Revendications

1. Procédé mis en œuvre par un ordinateur d'identification de métadonnées de contenu pour le partage et la gouvernance de cyber-contenu (ou procédé de MDCCSG), comprenant :
un système de traitement central regroupant tous les contenus au sein d'une application de partage de contenu et associés à celle-ci ;
la génération d'un identifiant de métadonnées de contenu avec un format uniforme, également appelé identifiant de MDCCSG ;
dans lequel l'identifiant de MDCCSG comprend un court code d'identifiant de MDCCSG, une information de propriété de MDCCSG et une pluralité d'éléments identifiants de métadonnées de contenu de base, dans lequel le court code d'identifiant de MDCCSG se trouve à l'avant de l'identifiant de MDCCSG entier, dans lequel le court code d'identifiant de MDCCSG présente une longueur standard de 32 bits ; dans lequel différents formats de codage de spécification sont adoptés respectivement pour le court code d'identifiant de MDCCSG et l'information de propriété de MDCCSG ; dans le court code d'identifiant de MDCCSG, 32 bits sont totalement utilisés pour définir l'information de métadonnées de contenu à base de bits et une pluralité de champs clés est décrite par des nombres entiers binaires, et la description se concentre sur des sémantiques de contenu et une information de sécurité ; dans l'information de propriété de MDCCSG, une pluralité d'éléments de métadonnées (MDE) sont catégorisés et sont compilés par des unités d'ensemble de métadonnées (MDSU) ;
dans lequel la flexibilité et l'extensibilité d'identifiants de MDCCSG sont assurées sur réservation et extension à la demande ;
dans lequel l'information de propriété de MDCCSG suit étroitement le court code d'identifiant de MDCCSG et contient une pluralité de MDSU ; chaque MDSU contient une pluralité de MDE, chaque MDE décrivant un aspect de l'information de propriété associées au contenu ; et l'information de propriété de MDCCSG contient deux MDSU clés obligatoires :
une unité d'ensemble d'information de description (DISU pour description information set unit) et une unité d'ensemble d'information de gestion (ou MISU pour management information set unit), dans lequel la DISU se concentre sur la description des propriétés de base et de l'information de sémantique du contenu ; et la MISU se concentre sur la description d'information de propriété importante concernant la gestion et la gouvernance de cyber-contenu, et
dans lequel la pluralité d'éléments identifiants de métadonnées de contenu de base sont choisis, et ces éléments identifiants de métadonnées de contenu de base couvrent une information de description de sémantique, une information d'authentification de confiance et
de garantie de sécurité du contenu, et des propriétés de qualité de contenu reflétant des éléments identifiants de niveau d'énergie (EL pour energy level) de sécurité sont créées au même moment, et des fonctions de « mécanisme de double signature » et d'« authentification et enregistrement à niveaux multiples mais encore de traçage de source et enquête de responsabilité » sont assurées en ajoutant une information d'identification de chaque sujet de responsabilité à chaque niveau d'authentification dans une chaîne de responsabilité et en générant une signature du tout.

2. Procédé mis en œuvre par un ordinateur d'identification de métadonnées de contenu pour le partage et la gouvernance de cyber-contenu selon la revendication 1, dans lequel le court code d'identifiant de MDCCSG est constitué d'une pluralité de champs, ces champs stockent divers codes de description d'information clé concernant du contenu, également désignés par code court de base ; de plus, le court code d'identifiant de MDCCSG présente également une partie d'extension, qui contient des codes de description d'information d'extension, également désignés par court code d'extension, le court code d'extension présente une longueur d'un multiple entier de 16 bits et est utilisé pour stocker des champs d'extension autre que le court code de base ; le court code de base et le court code d'extension sont collectivement appelés court code d'identifiant de MDCCSG.

3. Procédé mis en œuvre par un ordinateur d'identification de métadonnées de contenu pour le partage et la gouvernance de cyber-contenu selon la revendication 1, dans lequel les formats principaux de spécification d'identifiants de MDCCSG sont classés selon quatre types qui sont les suivants : champs dans le court code d'identifiant de MDCCSG, spécifié en utilisant des nombres entiers binaires en bits ; une tête de MDSU avec une longueur de 5 à 8 bits spécifiant principalement le nombre type de MDSU, le nombre de MDE, la longueur totale de tous les MDE, le comparateur rapide de MDE et similaire ; une tête de MDE avec une longueur de 3 à 6 bits spécifiant principalement un nombre type de MDE, le nombre de membres, la longueur de corps de MDE et similaire ; un corps de MDE occupant une pluralité de bits qui décrivent la valeur spécifique du MDE lui-même, et la tête de l'information de propriété de MDCCSG utilise également un format de spécification similaire à la tête de MDSU.

4. Procédé mis en œuvre par un ordinateur d'identification de métadonnées de contenu pour le partage et la gouvernance de cyber-contenu selon la revendication 1, dans lequel la définition d'éléments identifiants de MDCCSG de base comprend de manière spécifique :
(1) des éléments identifiants de base dans le court code de MDCCSG : le premier élément identifiant clé de cette partie est la version occupant 3 bits et est utilisé pour décrire le numéro de version d'un identifiant de MDCCSG ; les éléments identifiants de base dans le court code d'identifiant de MDCCSG comprennent en outre : le type de média, la priorité, la bannière, la règle d'analyse, la source, la catégorie, la sous-catégorie, le sujet, le type de contenu, le copyright et l'originalité, le code EL de sécurité, l'horodatage en secondes, l'horodatage en millisecondes, le n° de série et le total de contrôle ; de plus, 6 bits sont réservés dans la partie suivant le n° de série et avant le total de contrôle ;
(2) des éléments identifiants de base dans l'information de propriété de MDCCSG : cette partie adopte une MDSU pour catégoriser et compiler les éléments identifiants de MDCCSG, et il existe ici trois principaux types de MDSU, à savoir une DISU, une MISU et une unité d'ensemble d'information d'extension (ou EISU pour extension information set unit), où la DISU et la MISU sont des éléments d'identification obligatoires ; les éléments identifiants de base collectés par la DISU comprennent : le titre, le mot-clé, l'abrégé, l'auteur, l'entité, le copyright, l'originalité et la description de fichier ; les éléments identifiants de base collectés par la MISU comprennent : des éléments physiques, la provenance, l'ID de contenu, le chemin de propagation, la signature de contenu, l'info EL de sécurité, la chaîne de responsabilité et la signature du MDCCSG entier ; chaque élément identifiant de base est un MDE présentant une tête de MDE du même format, et la définition de la position, de la séquence, du nombre de type et les éléments identifiants de base en leur genre sont spécifiés ;
(3) des éléments identifiants de base prenant en charge l'authentification de confiance et la garantie de sécurité : une aide intégrée pour l'authentification de confiance et la garantie de sécurité de contenu est fournie en synthétisant les éléments identifiants dans l'identifiant de MDCCSG ; les éléments identifiants de base concernés comprennent principalement : le code EL de sécurité (une description simplifiée de l'info EL de sécurité) dans le court code d'identifiant de MDCCSG ; des éléments physiques, la signature du contenu, l'info EL de sécurité, la chaîne de responsabilité, et la signature de du MDCCSG entier dans l'information de propriété de MDCCSG ; dans lequel les éléments physiques se concentrent sur la description d'une information de dimension physique comme « le temps, l'espace, les personnes, la chose, l'objet » ; et les champs de signature de contenu et de signature du MDCCSG entier prennent en charge le « mécanisme de double signature » qui assure l'intégrité de données et la crédibilité de l'identité de signataire sur le contenu lui-même et l'identifiant de MDCCSG entier ; et les champs de code EL de sécurité et info EL de sécurité décrivent les propriétés qualitatives du contenu lui-même ; et le champ de la chaîne de responsabilité est en mesure de fournir un traçage de source et une enquête de responsabilité ; en combinant ces éléments identifiants, des fonctions « d'authentification à niveaux multiples et d'enregistrement + traçage de source et enquête de responsabilité » peuvent être remplies tout en prenant en charge les exigences du partage et de la gouvernance de mégadonnées de contenu.

5. Procédé mis en œuvre par un ordinateur d'identification de métadonnées de contenu pour le partage et la gouvernance de cyber-contenu (procédé de MDCCSG) selon la revendication 1, comprenant en outre :
la distribution, par l'application de partage de contenu, de tous les identifiants de MDCCSG à tous les terminaux utilisateurs de l'application de partage de contenu dans un ou plusieurs modes de transmission ;
la correspondance des identifiants de MDCCSG par un système de traitement sur chaque terminal utilisateur en deux étapes selon les intérêts de l'utilisateur ;
lors d'une première étape, la réalisation de correspondance rapide selon le court code d'identifiant de MDSCCG des métadonnées de contenu pour finaliser un filtrage primaire d'identifiants de MDCCSG importants ;
lors d'une deuxième étape, dans les identifiants de MDCCSG filtrés de manière primaire, la combinaison en outre de leur information de propriété de MDCCSG des métadonnées de contenu pour finaliser l'analyse à base de sémantique, de la correspondance personnalisée et des recommandations actives.

6. Procédé mis en œuvre par un ordinateur d'identification de métadonnées de contenu pour le partage et la gouvernance de cyber-contenu (MDCCSG) selon la revendication 1, dans lequel le système de traitement central comprend une application de gouvernance de contenu pour la gouvernance de contenu ;
dans lequel le procédé comprend en outre :
le regroupement en premier lieu de tous les contenus de terminaux utilisateurs au sein de l'application et associés à celle-ci et la réalisation de l'organisation centralisée et de la gouvernance sur les identifiants de MDCCSG des contenus par le système de traitement central pour former un espace d'identifiant de MDCCSG couvrant tous les contenus regroupés ;
puis, pour chaque contenu soumis à une demande d'authentification et d'enregistrement, le marquage de la signature numérique, de la source de contenu, de la crédibilité, de l'information d'importance, ensemble avec la voie de propagation et de l'information de sujet de responsabilité, dans l'identifiant de MDCCSG du contenu à l'aide de l'espace d'identifiant de MDCCSG par le système de traitement central ;
le transfert des identifiants de MDCCSG devant être distribués aux terminaux utilisateurs dans un ou plusieurs modes de transmission ;
à réception par l'utilisateur des identifiants de MDCCSG, l'évaluation de l'authenticité, de la crédibilité, et de l'influence des contenus en utilisant les champs de info EL de sécurité des métadonnées de contenu et du code EL de sécurité des métadonnées de contenu.

7. Procédé mis en œuvre par un ordinateur d'identification de métadonnées de contenu pour le partage et la gouvernance de cyber-contenu (MDCCSG) selon la revendication 1, dans lequel lors de l'étape de regroupement de tous les contenus au sein de l'application de partage de contenu et associés à celle-ci, les contenus sont principalement regroupés de deux manières : selon la première manière, le système de traitement central réalise une compilation de contenu active via Internet, laquelle est appelée compilation active ; selon une seconde manière, un fournisseur de contenu et son organisation de gouvernance supérieure enregistrent le contenu avec le système de traitement central dans une authentification niveau par niveau, qui est appelée une compilation d'authentification et d'enregistrement ;
pour un contenu acquis en utilisant la compilation active, son identifiant de MDCCSG est généré par le système de traitement central ; pour un contenu acquis en utilisant la compilation d'authentification et d'enregistrement, son identifiant de MDCCSG est généré de manière classique par le fournisseur de contenu et son organisation de gouvernance supérieure, et l'identifiant de MDCCSG n'est pas authentifié et enregistré niveau par niveau avant qu'il ne soit éventuellement authentifié et enregistré avec le système de traitement central ;
le « mécanisme de double signature » doit être mis en œuvre sur l'identifiant de MDCCSG de chaque contenu, l'intégrité de données du contenu lui-même et la non-répudiation d'identité de signataires sont assurées en utilisant la signature de contenu ; l'intégrité de données de l'identifiant de MDCCSG entier et la non-répudiation d'identité de signataires sont assurées en utilisant la signature du MDCCSG entier ; en outre, les fonctions « d'enregistrement d'authentification à niveaux multiples tout comme le traçage de source et l'enquête de responsabilité » peuvent être mises en œuvre sur la base du « mécanisme de double signature ».
